# FASCICULE DE BREVET EUROPEEN

(11) **EP 2 731 744 B1**
(45) Date de publication et mention de la délivrance du brevet: **12.08.2026**
(21) Numéro de dépôt: 12725805.1
(22) Date de dépôt: 06.06.2012
(51) Int. Cl.: B23B 31/16, B23B 31/12, B23B 31/173

(54) **DISPOSITIF DE MAINTIEN DE PIECES MECANIQUES**
HALTEVORRICHTUNG FÜR MECHANISCHE TEILE
DEVICE FOR SUPPORTING MECHANICAL PARTS

(30) Priorité: 15.07.2011 EP 11174136
(43) Date de publication de la demande: 21.05.2014
(73) Titulaire: Finter Lane S.A., Panama City (PA)
(72) Inventeur: MARCHAND, Alain, 74460 Marnaz (FR)
(74) Mandataire: Omnis-IP
(86) Numéro de dépôt international: PCT/EP2012/060692
(87) Numéro de publication internationale: WO 2013/010719

(56) Documents cités:
- CH-A- 535 624
- CH-A- 535 624
- FR-A1- 2 511 289
- FR-A1- 2 511 289
- US-A- 2 496 545
- US-A- 3 422 709
- US-A- 3 422 709
- US-A- 4 775 160
- US-A- 4 775 160
- US-A- 4 971 340
- US-A- 4 971 340

## Description

### DOMAINE TECHNIQUE

La présente invention concerne un dispositif de maintien de pièces mécaniques selon le préambule de la revendication 1. Un tel dispositif est montré par US 3 422 709 A, un tel dispositif étant notamment utilisé dans le domaine de la mécanique de précision. Elle concerne en particulier un dispositif en mesure de maintenir des pièces ayant une forme ou une configuration particulière, en vue de leur usinage ou d'un traitement à leur faire subir. Elle concerne également un dispositif permettant le maintien de barres utilisées notamment pour la fabrication de pièces mécaniques de précision par décolletage. De façon plus détaillée, elle concerne un dispositif de maintien de pièces mécaniques, comportant un porte-coulisseau formé d'un corps et d'une tête pourvus d'un alésage central dans lequel est placée une partie de la pièce à maintenir, cette pièce à maintenir dépassant de ladite tête, la tête comportant une zone conique, le dispositif de maintien comportant en outre au moins deux coulisseaux et un élément d'actionnement desdits coulisseaux.

### TECHNIQUE ANTERIEURE

Des dispositifs de maintien de pièces mécaniques sont bien connus et largement utilisés notamment pour le décolletage, le tournage, le fraisage ou plus généralement l'usinage de ces pièces. Un type de dispositif couramment utilisé est une pince de serrage élastique ou pince fendue. Ce type de pinces comporte un corps rigide et une tête pourvue de fentes et d'un alésage central. Une bague de serrage est placée autour de la tête. La pièce à usiner est placée dans l'alésage central de telle manière que la zone à usiner de cette pièce dépasse de la tête. Lorsque la pièce est en place, la bague de serrage est disposée autour de la tête et actionnée, généralement en rotation, de façon à resserrer les fentes de la tête. Ainsi, la matière de la tête serre la pièce à usiner et la maintien. Ces pinces de serrage utilisent les propriétés d'élasticité de la matière formant la tête de la pince. Une pince similaire aux pinces fendues conventionnelles est notamment décrite dans le modèle d'utilité DE 88 07 447.1. La pince décrite dans ce document comporte un élément de caoutchouc dans les fentes réalisées entre les mors.

Les pinces fendues conventionnelles de même que la pince décrite dans ce document présentent un certain nombre de limitations. De par leur conception, le déplacement élastique des éléments formant les mors est faible. La gamme de diamètres de pièces qu'une telle pince peut recevoir est donc très limitée. De plus, si le diamètre de la pièce à usiner est légèrement plus grand ou légèrement plus petit que le diamètre nominal de la pince fendue, la pièce sera serrée uniquement sur l'arrière ou uniquement sur l'avant et non pas sur une longueur importante de la pince. Ceci implique un serrage peu optimal et un éventuel marquage des pièces à usiner. Un mauvais serrage a pour conséquence des défauts lors de l'usinage notamment des défauts de concentricité.

Un autre problème vient de la matière première dans laquelle les pièces sont usinées. En pratique, par exemple lorsque les pièces sont usinées par décolletage, ces pièces sont souvent réalisées à partir de barres cylindriques obtenues par laminage. Lorsque ces barres sortent du laminage, elles présentent des défauts de dimension qui impliquent que leur diamètre n'est pas constant sur toute la longueur de la barre. Typiquement, une barre peut avoir des fluctuations de diamètre de plusieurs dixièmes de millimètres ainsi que des défauts de forme. De telles fluctuations impliquent que les barres ne peuvent pas être utilisées telles quelles dans une pince fendue. En effet, la gamme de diamètres qu'une pince fendue déterminée peut recevoir est souvent plus faible que les fluctuations de diamètre des barres. Dans la pratique, les barres sont d'abord rectifiées afin d'amener leur diamètre dans une plage de tolérance acceptable, avant de pouvoir être usinées. Cette opération de rectification engendre des coûts importants, aussi bien au niveau de la manutention que de la rectification elle-même.

D'autres types d'éléments de serrage sont décrits notamment dans les publications US 4 775 160, FR 2 511 289 et DE 20 2009 007227. Ces documents concernent tous des mandrins destinés à maintenir un objet tel qu'un foret. De tels mandrins permettent de maintenir un objet selon une grande gamme de diamètres. Par contre, du fait de leur conception, ils ne permettent pas d'assurer un maintien suffisamment concentrique pour autoriser un usinage répondant aux exigences courantes dans le domaine de la mécanique de précision. Ce manque de précision vient notamment du fait que les mors sont mobiles dans une gorge sans y être ajustés et sont asservis par un chemin de mors comportant un filetage. Les gorges servent uniquement à guider les mors lors de leur déplacement longitudinal, mais elles ne sont pas en mesure d'assurer un positionnement précis. De plus, afin que le système puisse fonctionner sans blocage, les mors et le filetage doivent comporter un certain jeu qui est incompatible avec la précision requise pour l'usinage.

Selon une utilisation courante des pinces de serrage, la barre dans laquelle sont réalisées les pièces à usiner traverse la pince de serrage selon un axe longitudinal. La conception des mandrins mentionnés ci-dessus empêche le passage d'une barre. Ces mandrins ne peuvent donc pas être utilisés dans le domaine dans lequel la présente invention trouve une application importante.

Le document GB 735 703 décrit un dispositif de serrage formé d'une cage cylindrique comportant des fentes longitudinales. Ces fentes reçoivent des éléments de serrage. Les éléments de serrage ont une zone conique qui prend appui contre un corps de mandrin. La surface du corps du mandrin opposé à la zone conique comporte un filetage qui coopère avec un filetage d'un capuchon. La rotation du capuchon entraîne le déplacement du corps du mandrin qui à son tour engendre le déplacement des éléments de serrage.

Comme dans le cas des mandrins, les éléments de serrage sont flottants dans les fentes. De plus, la bague, lors de sa rotation pour la mise en position des éléments de serrage, applique une contrainte tangentielle et par conséquent une déformation. Ces caractéristiques impliquent un défaut de précision au niveau du maintien des pièces et par conséquent de leur usinage. Il est à noter également que le dispositif décrit dans ce document ne permet pas le passage d'une barre de matière.

Le brevet américain US 2 430 761 décrit une pince de serrage ayant un corps comportant quatre fentes dans lesquelles sont placés des mors mobiles transversalement. Les mors comportent des inserts destinés à s'adapter à la forme de la pièce à usiner. Les mors ont une surface inclinée qui coopère avec une surface inclinée d'un anneau. Le déplacement longitudinal de l'anneau engendre un déplacement transversal des mors.

Cette pince de serrage présente un certain nombre d'inconvénients. Sa conception est relativement complexe, de sorte qu'il n'est pas possible de réaliser une pince de petite dimension. Elle n'est donc applicable qu'aux pièces ayant un diamètre de plusieurs millimètres. La pince de serrage elle-même est tenue sur un mandrin. Les mandrins n'ayant généralement pas un positionnement précis, la pince de serrage ne peut pas être positionnée de façon précise. La pince comporte un bonnet de serrage placé autour du corps de la pince. Ce bonnet est centré par rapport au corps. Si le corps est mal positionné, le bonnet ne sera pas mieux positionné et la pièce présentera des défauts. Le bonnet a une épaisseur relativement importante. Il en résulte que la distance entre l'extrémité avant des mors et la zone dans laquelle la pièce et usinée et grande. Ceci implique un porte-à-faux qui génère des imprécisions sur la pièce finie. Le centre de la pince n'est pas vide, mais comporte des éléments permettant d'actionner la pince. De ce fait, il n'est pas possible d'y passer une barre.

Le brevet CH 535 624 concerne une pince de serrage comportant un corps pourvu d'alvéoles. Des mâchoires sont introduites dans les alvéoles. Le corps comporte une zone conique avant et une zone conique arrière. Lorsque la pince est utilisée sur une machine, un écrou presse les zones coniques et déplace les mâchoires de façon à serrer la pièce à maintenir.

Du point de vue de sa conception, la pince de serrage selon cette invention présente un inconvénient majeur. En effet, la réalisation des alvéoles dans un corps rigide par exemple en acier implique nécessairement que ce corps s'ouvre ou en d'autres termes, que les alvéoles s'écartent. Cette ouverture ne peut pas se faire de façon contrôlée et la précision de la pince de serrage ne peut pas être assuré. De plus, la longueur des mors est très grande par rapport au corps de la pince. De ce fait, les mors ne sont pas guidés de façon optimale dans le corps et la précision du positionnement et par conséquent de l'usinage en souffre. Il n'est donc pas possible de garantir un usinage précis avec une telle pince.

Un autre type de dispositif de maintien est connu sous l'appellation de canon de guidage. Un tel canon est généralement vissé sur le bâti ou l'arbre d'une machine. Il maintien la barre à usiner de telle façon qu'elle puisse tourner à l'intérieur du canon tandis que ce dernier peut soit rester immobile, soit tourner, selon l'utilisation.

Les canons de guidage actuels nécessitent d'utiliser des barres ayant des défauts de concentricité minimes. En pratique, les barres brutes de laminage doivent être rectifiées avant de pouvoir être usinées lorsqu'elles sont guidées dans un canon de guidage. En effet, les défauts de concentricité ou les fluctuations de diamètre impliquent des frottements importants qui peuvent générer des dégradations de la pièce et/ou du canon de guidage et qui empêchent de réaliser un usinage précis.

Les pinces et canons existants sont fonctionnels lorsque la partie de la pièce à usiner qui est placée dans la pince est un cylindre de diamètre constant. Pour des pièces ayant une forme particulière, ce genre de pince peut ne pas être adapté. A titre d'exemple, si la pièce à usiner comporte une zone de grand diamètre suivie d'une zone de petit diamètre et finalement de la zone à usiner, le passage de la zone de grand diamètre dans l'alésage de la tête peut poser des problèmes. En effet, il est nécessaire d'avoir une tête avec une grande élasticité pour laisser passer la zone de grand diamètre et pour serrer la tête autour de la zone de petit diamètre. L'élasticité de la tête est due à la déformation de la matière dans laquelle cette tête et réalisée. Il est clair que cette élasticité est limitée, ce qui pose des problèmes lorsque la pièce à maintenir a des zones de grandes différence de diamètre.

Pour des pièces qui ne peuvent pas être maintenues par ce type de pinces, il existe d'autres dispositifs de maintien. Un exemple connu est un mandrin avec des mors comportant une crémaillère. Ce mandrin comporte un filet agissant sur la crémaillère des mors de façon à les déplacer simultanément et à assurer le centrage de la pièce à usiner.

Ces mandrins permettant ce type de serrage sont relativement difficiles à usiner et donc coûteux. De plus, la mise en place et le serrage de la pièce à usiner est relativement longue et difficile à automatiser. Un tel mandrin n'est donc pas idéal et réservé aux cas où les pinces de serrage élastique ne sont pas utilisables.

En outre, la conception de ces mandrins empêche d'atteindre la précision requise, en particulier du fait que la crémaillère et le filet doivent présenter un certain jeu.

Un certain nombre de pinces ou d'outils de serrage de l'art antérieur ont des mors destinés à maintenir la pièce à usiner, ces mors étant contraints vers la pièce au moyen d'une bague filetée. La rotation de la bague entraîne son déplacement qui agit sur les mors. Un problème avec ces systèmes est que la bague applique une force tangentielle aux mors. Cette force tangentielle génère une déformation des mors, ce qui entraîne une erreur de positionnement de la pièce. La précision de l'usinage s'en trouve affecté.

Un certain nombre de dispositifs de maintien de l'art antérieur ont leur zone médiane utilisée pour l'actionnement des mors ou des éléments de serrage. Ces dispositifs ne permettent donc pas le passage d'une barre et ne sont donc pas adaptés pour le décolletage.

### BREF EXPOSE DE L'INVENTION

La présente invention se propose de pallier les inconvénients des dispositifs de l'art antérieur en réalisant un dispositif de maintien des pièces offrant une large gamme d'utilisations possibles. Ce dispositif de maintien est toutefois plus simple à réaliser qu'un mandrin comportant des mors et est plus souple à utiliser.

Ce but est atteint par un dispositif de maintien de pièces mécaniques telle que défini dans la revendication 1.

Dans le dispositif de l'invention, le maintien de la pièce à usiner ou à traiter n'est pas réalisé grâce à l'élasticité de la matière formant l'outil de serrage, mais à des coulisseaux. Ceci permet de donner aux éléments de serrage, des courses de très grande amplitude, sans risquer de déformer le dispositif. Il en résulte qu'il est possible de maintenir des pièces ayant par exemple des zones de diamètre fortement différent.

En utilisant le principe de l'invention, il est également possible de maintenir de façon très efficace, des pièces de forme non conventionnelle. A titre d'exemple, il est possible de maintenir des pièces ayant un ou plusieurs méplats, des pièces ayant des sections transversales carrées, hexagonales ou autres, des zones filetées, des pièces coniques, etc.

La conception du dispositif de maintien de l'invention, et en particulier des coulisseaux, permet un positionnement optimal de la pièce, même si celle-ci présente des défauts de concentricité et des zones dans lesquelles le diamètre présente des fluctuations importantes.

Le dispositif peut être utilisé aussi bien comme pince de serrage ayant pour fonction de maintenir fermement la pièce, que comme canon de guidage ayant pour fonction de maintenir en position la barre utilisée pour la fabrication des pièces, sans pour autant la maintenir en rotation. De plus, le dispositif de maintien permet le passage de barres du fait qu'il est évidé en son centre. Il est ainsi possible de l'utiliser pour une production par décolletage.

Quelle que soit la manière de maintenir la pièce, en guidage ou en serrage, le dispositif de l'invention assure une précision de positionnement nettement meilleur que les dispositifs de l'art antérieur. Cette précision de positionnement a pour effet que l'utilisation de barres ayant des fluctuations de diamètre de plusieurs dixièmes de millimètres est possible, tout en permettant l'usinage de pièces avec une tolérance de fabrication de quelques centièmes de millimètres, soit une tolérance relativement courante dans le domaine de la mécanique de précision. Il en résulte que la rectification des barres avant usinage peut être évitée dans la majorité des cas, sans pour autant diminuer la qualité des pièces finies.

De par la conception du dispositif de l'invention, il n'y a pas de force tangentielle sur les coulisseaux. De ce fait, il n'y a pas de déformation des coulisseaux et de déplacement de la pièce, conduisant à des imprécisions lors de l'usinage. En outre, les pièces peuvent être mises en place de façon automatique et le dispositif de maintien peut être verrouillé très simplement, également de façon automatique.

Un autre avantage du dispositif de l'invention est le fait que les coulisseaux ont une zone de serrage relativement grande, donc une grande surface de contact avec la pièce à maintenir. De plus, cette zone de serrage a une extrémité très proche de la zone dans laquelle la pièce est usinée. Il n'y a donc pratiquement pas de porte-à-faux, ce qui fait que la pièce est maintenue de façon rigide dans le dispositif. La précision d'usinage s'en trouve encore améliorée.

Il est également possible de prévoir que le dispositif comporte une zone empêchant tous copeaux ou matériaux indésirables de pénétrer dans le dispositif de serrage. Ces copeaux peuvent générer divers problèmes tels que marquage des pièces, frottements, défauts d'usinage, etc. Cette zone empêchant les matériaux indésirables de pénétrer dans la pince peut être associés à un flux de fluide sous pression qui a pour effet de chasser les copeaux et de présenter une zone d'usinage libre de tout déchet.

Selon un mode de réalisation particulier de l'invention, le dispositif de maintien peut comporter un ressort de compression dont la fonction est d'ajuster le serrage à la pièce en cours d'usinage, de façon à assurer un maintien optimal lors de cet usinage. Ceci permet d'utiliser des barres de matière ayant des fluctuations de diamètre, des défauts de concentricité ou d'autres défauts qui les rendent inutilisables avec des dispositifs de maintien de l'art antérieur.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue éclatée d'une partie du dispositif de l'invention selon un premier mode de réalisation de l'invention;
- la figure 2 est une vue en perspective d'une partie du dispositif de l'invention selon un deuxième mode de réalisation;
- la figure 3 est une vue en perspective d'une partie du dispositif de l'invention selon un troisième mode de réalisation;
- la figure 4 est une vue partiellement en coupe du dispositif de maintien de l'invention, dans une première position dite ouverte;
- la figure 5 est une vue similaire à la figure 4, dans une deuxième position dite fermée;
- la figure 6 est une vue schématique en coupe d'un détail du dispositif de l'invention selon un mode de réalisation particulier dans une position ouverte;
- la figure 7 est une vue similaire à la figure 6, dans une position fermée;
- la figure 8 est une vue schématique en coupe d'une variante du dispositif de maintien de l'invention;
- la figure 9 est une vue schématique du dispositif de l'invention lorsqu'il est utilisé sur une machine, dans la position illustrée par la figure 4;
- la figure 10 est une vue similaire à la figure 9, dans la position illustré par la figure 5;
- la figure 11 est une vue schématique du mode de réalisation du dispositif de l'invention tel que représenté par la figure 8, utilisé sur une machine;
- la figure 12 est une vue partiellement en coupe d'un dispositif de maintien de l'invention monté sur une machine, selon un premier mode de réalisation; et
- la figure 13 est une vue similaire à la figure 12, selon un deuxième mode de réalisation.

### MANIERE DE REALISER L'INVENTION

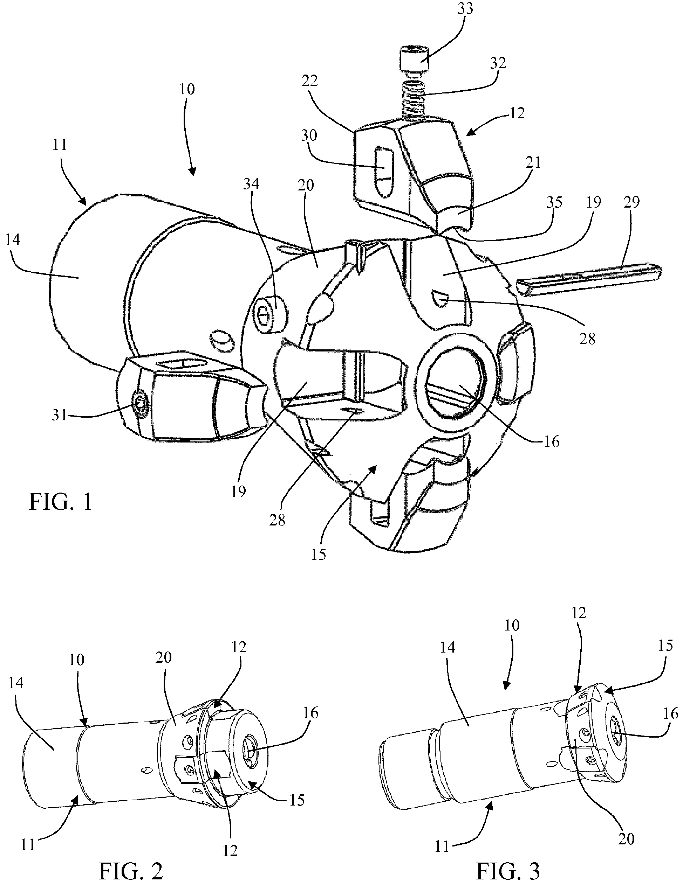

En référence aux figures, le dispositif de maintien 10 de l'invention peut prendre différentes formes, trois d'entre elles étant illustrées ici. L'une des formes, dénommée "pince grande ouverture" est illustrée par la figure 1. Une autre forme, dite "pince de serrage" est illustrée notamment par la figure 2. La troisième forme, dénommée "canon de guidage" est illustrée par la figure 3. Dans la présente invention, la notion de maintien d'une pièce englobe aussi bien la notion de serrage que celle de guidage.

Le dispositif de maintien 10 est formé essentiellement d'un porte-coulisseau 11, de coulisseaux 12 et d'un élément d'actionnement 13 des coulisseaux. Le porte-coulisseau 11 comprend un corps 14 et une tête 15. Le corps 14 est de forme générale cylindrique. Le corps 14 et la tête 15 comprennent un alésage central 16 ayant un diamètre intérieur supérieur au diamètre des pièces mécaniques 17 à maintenir. En d'autres termes, le rapport entre la dimension de l'alésage central et celle des pièces à maintenir est tel que la pièce à maintenir peut être introduite dans l'alésage central. Selon l'utilisation du dispositif de maintien, le porte-coulisseau 11 peut être prévu pour être entraîné en rotation par une machine d'usinage par exemple. Cet entraînement en rotation est réalisé de façon conventionnelle et n'est pas décrit plus en détail ici.

Le porte-coulisseau 11 peut également être prévu pour maintenir et guider la pièce mécanique 17 sans tourner. Dans ce cas, la pièce peut tourner dans le dispositif de maintien.

Le corps 14 du porte-coulisseau 11 est solidaire de la tête 15, ces deux éléments étant généralement usinés dans un même bloc de matière. Cette tête comporte, dans les exemples illustrés, quatre alésages latéraux 19. Il est également possible de prévoir moins d'alésages latéraux, par exemple deux ou trois, ou plus d'alésages, par exemple six ou huit alésages. Le nombre d'alésage peut dépendre de la taille des pièces à maintenir, de leur forme particulière, de la force de serrage souhaitée, etc.

La tête 15 du porte-coulisseau comporte une zone conique 20. Les alésages latéraux 19 débouchent d'une part dans la zone conique 20 de la tête et d'autre part, dans l'alésage central 16 de cette tête. Les coulisseaux 12 sont prévus pour être reçus chacun dans un alésage latéral 19. Les dimensions et les formes respectives des alésages latéraux 19 et des coulisseaux sont telles que les coulisseaux 12 peuvent se déplacer longitudinalement dans les alésages latéraux 19 sans jeu ou avec un jeu faible. Ce déplacement longitudinal se fait selon un axe sensiblement perpendiculaire à un axe longitudinal 20' de l'alésage central 16. Ces coulisseaux sont en outre prévus pour dépasser légèrement de la zone conique 20 de la tête lorsqu'ils sont en appui contre la pièce 17 à maintenir. Il est à noter qu'en fonction de la pièce mécanique à maintenir, les coulisseaux peuvent être changés. La zone du coulisseau en appui contre la pièce à maintenir ou zone de serrage peut ainsi être adaptée à la forme particulière de cette pièce. Selon un mode de réalisation particulier de l'invention, la zone de serrage des coulisseaux a une forme d'arc de cercle, en coupe transversale. Selon une variante avantageuse, une coupe transversale du coulisseau peut présenter plusieurs arcs de cercle sensiblement alignés, ayant des rayons de courbure différents. Une zone ayant un rayon de courbure petit peut être réalisée au centre, une zone ayant un rayon de courbure légèrement plus grand peut border la première zone et une troisième zone ayant un rayon de courbure plus grand peut entourer les deux premières. Ceci permet d'offrir un maintien optimal pour trois diamètres différents de pièces ou de barres à usiner. Il est clair que d'autres formes ou un nombre différent de secteurs peut être envisagés. De même, la longueur du coulisseau peut être ajustée au diamètre de la pièce. Selon une utilisation particulière, il est possible que le dispositif de maintien 10 comporte plus d'alésages latéraux 19 que de coulisseaux 12. A titre d'exemple, il est envisageable d'avoir une tête 15 comportant six alésages latéraux et de n'utiliser que trois coulisseaux. Ceci permet une grande souplesse d'utilisation.

Selon un mode de réalisation avantageux, les coulisseaux ont une face avant 21 et une face arrière 22 légèrement incurvées. Ceci permet d'assurer un déplacement et un maintien optimal des coulisseaux dans l'alésage latéral correspondant. En pratique, les dimensions des coulisseaux et des alésages latéraux sont ajustés de façon que les coulisseaux puissent glisser pratiquement sans jeu ou avec un jeu très faible dans les alésages. Ce type d'ajustement est connu sous la dénomination d'ajustement glissant.

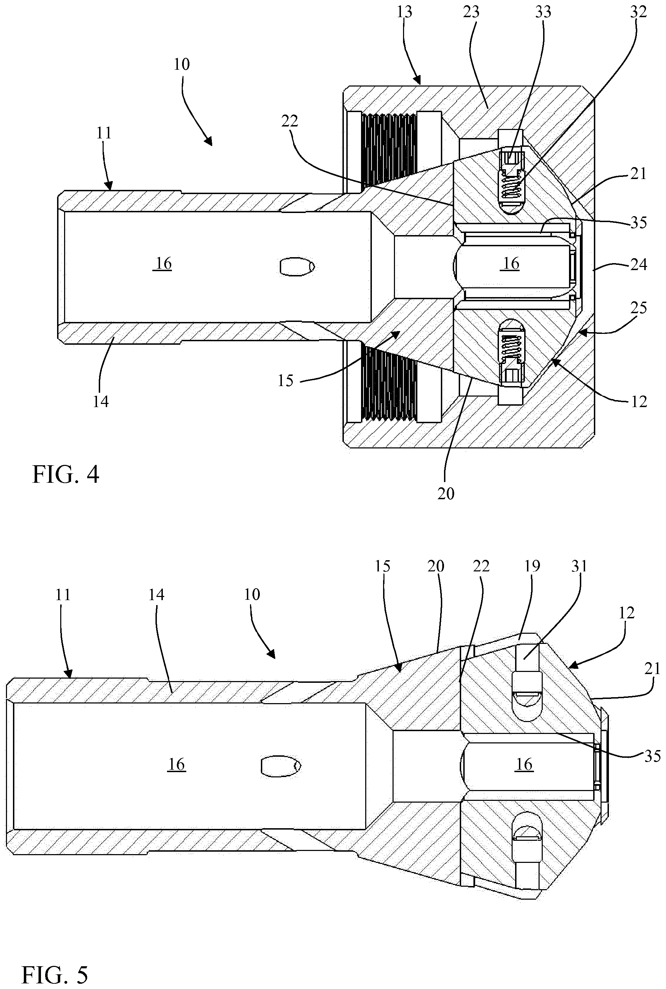

L'élément d'actionnement 13 des coulisseaux peut prendre différentes formes. Dans les modes de réalisation illustrés par les figures 1, 4-7, 9 et 10, cet élément d'actionnement est un bonnet 23.

Ce bonnet comporte un passage central 24 et une zone intérieure conique 25. Il est disposé autour de la tête 15 du dispositif de maintien de telle façon que la pièce 17 maintenue dans l'alésage central de la tête et du corps traverse également le passage central 24 du bonnet.

En position d'utilisation, la zone intérieure conique 25 du bonnet est disposée à proximité de la zone conique 20 de la tête.

Lorsque le bonnet 23 est déplacé vers l'arrière par rapport au corps, c'est-à-dire dans une direction opposée à la zone dans laquelle la pièce mécanique est usinée, la zone intérieure conique 25 du bonnet prend appui contre les zones des coulisseaux 12 qui dépassent de la zone conique de la tête. Le contact entre ces plans inclinés a pour effet de presser les coulisseaux en direction de l'alésage central de la tête. Ces coulisseaux 12 se déplacent et prennent appui contre la pièce mécanique 17 de façon à la maintenir. Ce déplacement se fait le long d'un axe sensiblement perpendiculaire à l'axe longitudinal 20' de l'alésage central.

Le déplacement des coulisseaux est réalisé grâce au déplacement relatif du porte-coulisseau 11 par rapport au bonnet 23. Ce déplacement relatif est en principe réalisé en déplaçant le porte-coulisseau tout en maintenant le bonnet immobile.

Selon un mode de réalisation préféré, le déplacement du porte-coulisseau 11 vers l'avant ou l'arrière est réalisé par le biais de moyens hydrauliques, électriques ou pneumatiques liés à la machine sur laquelle le dispositif de maintien 10 est installé.

Comme on peut aisément le comprendre, le rapport entre le déplacement longitudinal du porte-coulisseau 11 et le déplacement transversal des coulisseaux 12 dépend de la pente de la zone intérieure conique 25 du bonnet. La pente peut être définie par l'angle formé par une génératrice du cône avec l'axe longitudinal 20' de l'alésage central. Plus cet angle est élevé, plus le déplacement transversal des coulisseaux sera élevé pour un même déplacement relatif du bonnet et du porte-coulisseau. De manière similaire, le rapport entre la force longitudinale appliquée sur le bonnet et la force de serrage de la pièce 17 dépend également de la pente de la zone intérieure conique 25 du bonnet 23. Plus cet angle est élevé, plus la force à appliquer sur le bonnet devra être grande pour une force de serrage constante.

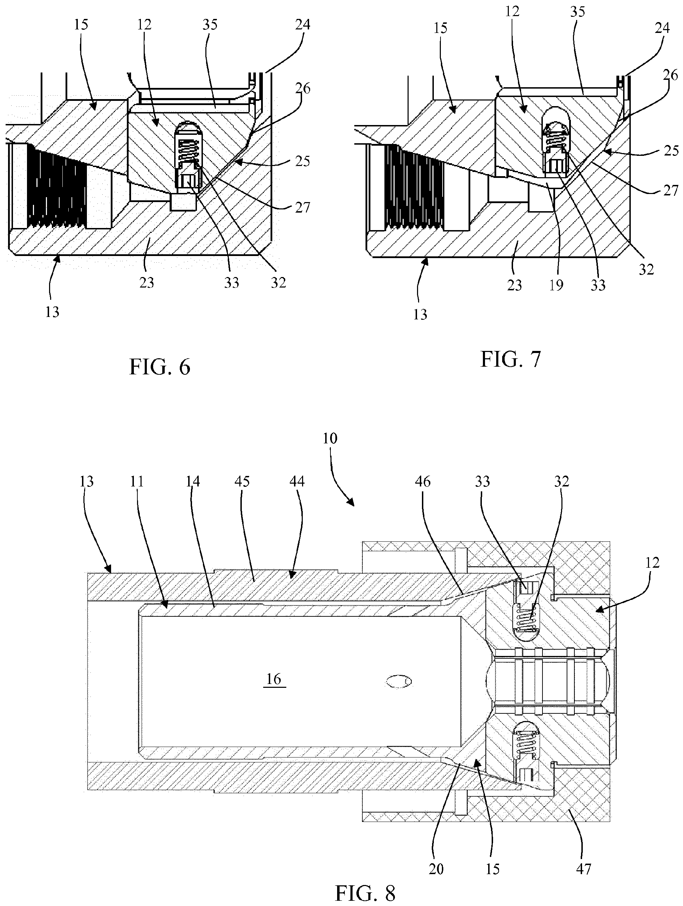

Selon une variante avantageuse illustrée par les figures 6 et 7, la zone intérieure conique 25 du bonnet peut être formée de plusieurs parties coniques ayant des angles différents. A titre d'exemple, une première partie 26 peut avoir un angle élevé permettant un déplacement important des coulisseaux pour un faible déplacement du bonnet. Une deuxième partie 27 peut avoir un angle plus faible pour assurer une plus grande force de serrage.

En déterminant de façon adéquate les angles des différentes parties du bonnet, il est possible d'optimiser les déplacements des coulisseaux ainsi que les forces de serrage.

Comme cela est visible dans la figure 1, la tête 15 comporte, pour chaque coulisseau 12, une gorge 28 agencée pour recevoir une barrette 29. Les coulisseaux 12 comportent chacun une lumière 30 transversale. Lors de la mise en place des coulisseaux, la barrette 29 est introduite dans la gorge 28 correspondante et dans la lumière 30. Les coulisseaux comportent en outre un trou 31 au moins partiellement fileté ayant un axe sensiblement perpendiculaire à un axe longitudinal de la barrette. Ce trou 31 contient d'une part un ressort de rappel 32 et d'autre part, une vis de précontrainte 33. Une des extrémités du ressort de rappel 32 prend appui sur la barrette 29 et l'autre extrémité sur la vis de précontrainte 33.

La fonction du ressort de rappel 32 coopérant avec la barrette 29 est de déplacer les coulisseaux 12 vers l'extérieur de la tête lorsque le bonnet, ou plus généralement l'élément d'actionnement, ne les presse pas en direction de l'alésage central. Grâce à ceci, les coulisseaux laissent le passage libre pour la mise en place et le retrait de la pièce à usiner. La barrette 29 peut être maintenue dans la gorge 28 au moyen d'une vis de maintien 34.

Les coulisseaux tels qu'illustrés par la figure 1 comprennent une face inférieure 35 prenant appui contre la pièce à maintenir. Cette face peut avoir un profil incurvé destiné à s'adapter à la majorité des pièces à maintenir ou au contraire, avoir un profil spécifique à la pièce à maintenir.

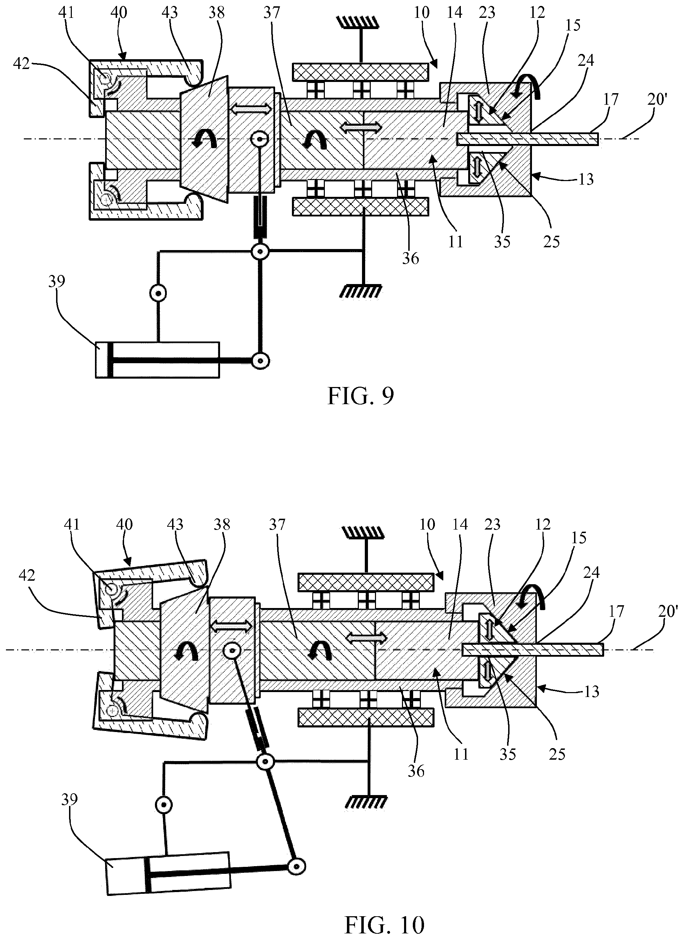

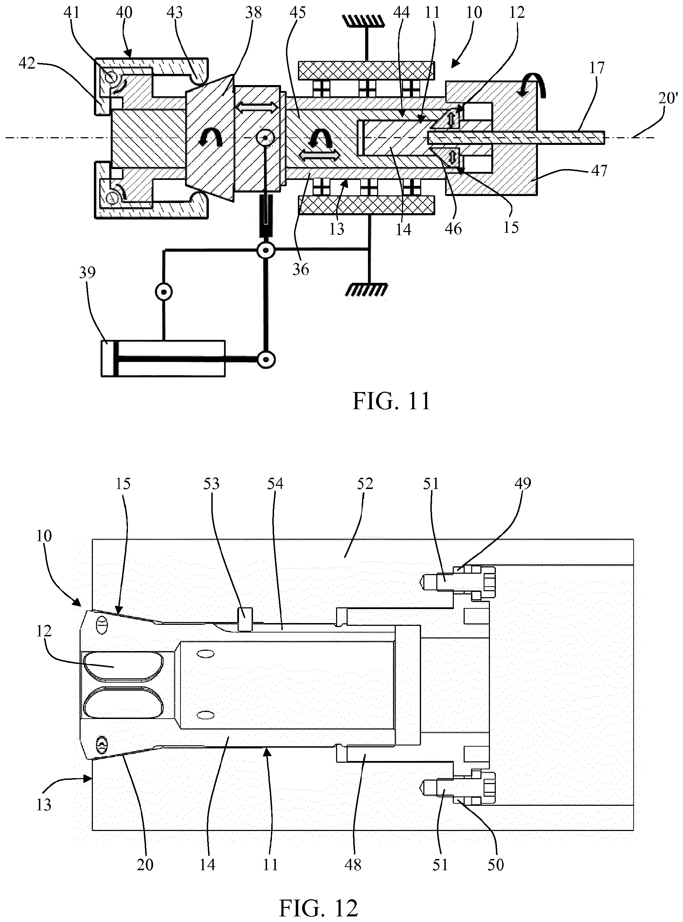

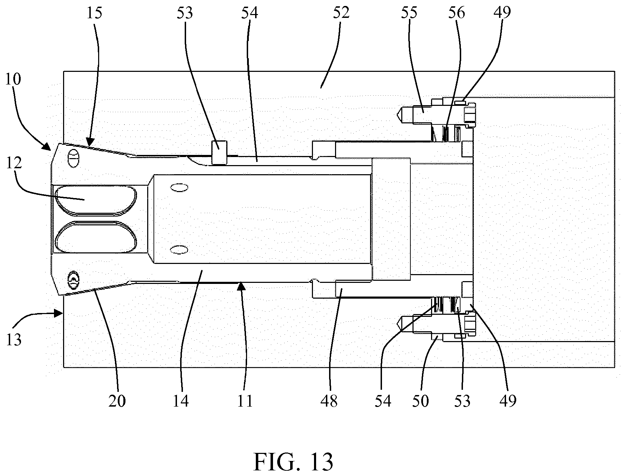

Les figures 9 à 13 illustrent le dispositif de maintien 10 de l'invention tel qu'il est utilisé sur une machine, par exemple en vue de l'usinage de la pièce mécanique 17 à maintenir. Plus précisément, les figures 9 et 10 illustrent l'utilisation d'un dispositif de maintien réalisé sous la forme d'une pince "grande ouverture" telle qu'illustrée par la figure 1 notamment. La figure 11 concerne un dispositif de maintien réalisé sous la forme d'une "pince de serrage" illustrée par la figure 2. Le mode de réalisation représenté par la figure 11 utilise un dispositif de maintien représenté par les figures 2 et 8. Les figures 12 et 13 représentent un dispositif de maintien réalisé sous la forme d'un canon de guidage illustré par la figure 3.

Dans la figure 9, le dispositif est ouvert, ce qui permet la mise en place et le retrait de la pièce. Dans la figure 10, les coulisseaux sont pressés vers le centre de l'alésage central de façon à maintenir la pièce 17.

Dans le mode de réalisation illustré par ces figures 9 et 10, le bonnet 23 est solidaire d'un arbre 36 entourant le corps 14 du dispositif de maintient. Le porte-coulisseau 11 est monté sur une douille 37 de façon à être solidaire de celle-ci. La douille reçoit un élément conique 38 pouvant coulisser le long de l'arbre 36. L'élément conique 38 est solidaire d'un vérin 39 agencé pour déplacer cet élément conique vers l'avant et vers l'arrière.

L'arbre 36 comprend deux chiens 40 pouvant pivoter autour d'un axe 41 solidaire de l'arbre 36. Les chiens ont une patte arrière 42 agencée pour prendre appui contre la douille et une patte latérale 43 agencée pour prendre appui contre une zone inclinée de l'élément conique 38.

Lorsque le vérin 39 est activé pour faire reculer l'élément conique 38, les pattes latérales 43 des chiens en appui sur les zones inclinées s'écartent de l'alésage central 16. Les chiens 40 pivotent autour de l'axe 41 solidaire de l'arbre. Les extrémités des pattes arrières 42 en appui contre la douille 37 pressent cette dernière vers l'avant. Le bonnet 23 étant fixe, le déplacement vers l'avant du porte-coulisseau 11 a pour effet de presser les coulisseaux 12 vers le centre et ainsi, de maintenir la pièce 17 entre les coulisseaux.

Lorsque le vérin 39 est actionné pour ramener l'élément conique 38 vers l'avant, les chiens 40 pivotent dans leur position illustrée par la figure 9. Les pattes arrières 42 ne pressent plus la douille vers l'avant. Celle-ci peut reprendre sa position arrière, ce qui a pour effet de déplacer le porte-coulisseau 11 par rapport au bonnet 23. L'action conjuguée des barrettes 29 et des ressorts de rappel 32 pressent les coulisseaux 12 vers l'extérieur et libèrent ainsi la pièce mécanique 17.

Dans le mode de réalisation illustré par les figures 8 et 11, l'élément d'actionnement 13 des coulisseaux est un cylindre d'actionnement 44 disposé autour de la tête 15 et d'au moins une partie du corps 14 du porte-coulisseau 11. Ce cylindre d'actionnement 44 comporte une zone cylindrique 45 dans laquelle le corps peut se déplacer longitudinalement. Il comporte en outre une zone conique 46 disposée à proximité de la tête 15 et des coulisseaux 12 lorsque le dispositif de maintien 10 est monté.

Dans ce mode de réalisation, le porte-coulisseau 11 est associé au cylindre d'actionnement 44 non de façon rigide comme dans le mode de réalisation des figures 9 et 10. En effet, le porte-coulisseau 11 peut se déplacer longitudinalement dans ce cylindre d'actionnement 44. Le dispositif de maintien 10 peut comporter un capuchon 47 disposé autour de la tête 15 du porte-coulisseau 11 et solidaire de ce dernier.

Ce capuchon 47 peut avoir le même aspect extérieur que le bonnet 23, mais il ne joue pas le rôle d'élément d'actionnement des coulisseaux. Cet élément d'actionnement est formé par le cylindre d'actionnement.

La zone conique 46 du cylindre d'actionnement entre en contact avec les coulisseaux 12 lorsque ce cylindre d'actionnement est déplacé vers l'avant. Le porte-coulisseau 11 est généralement maintenu dans une position longitudinale fixe grâce au maintien du capuchon 47 dans une position fixe.

Ce déplacement vers l'avant du cylindre d'actionnement a pour effet de presser les coulisseaux 12 vers l'alésage central et ainsi de maintenir la pièce.

Le déplacement du cylindre d'actionnement peut être effectué de la même manière que le déplacement du porte-coulisseau tel qu'illustré par les figures 9 et 10.

L'utilisation d'un bonnet 23 ou d'un capuchon 47 autour de la tête présente plusieurs avantages. Il est par exemple possible d'injecter de l'air sous pression ou un fluide dans le bonnet ou le capuchon. Ceci permet d'évacuer d'éventuels copeaux ou d'éviter qu'ils entrent dans la tête lors de l'usinage de pièces. Ceci permet également de refroidir le dispositif de maintien et la pièce lors de l'usinage. Il est également possible de prévoir un canal de fluide sur ou dans le corps 14 du dispositif, pour une injection de fluide sous pression, de façon à chasser les copeaux et autres déchets.

Dans le mode de réalisation illustré par la figure 12, le dispositif de maintien 10 l'invention est fixé de façon rigide à la machine utilisée pour l'usinage. Ce dispositif de maintien 10 comprend un écrou 48 comportant un anneau 49. Cet anneau est pourvu de trous 50 permettant de positionner l'écrou 48 sur des vis de blocage 51 solidaires du bâti 52 de la machine d'usinage. L'écrou est maintenu rigidement en appui contre le bâti au moyen des vis de blocage 51. Le bâti de la machine comporte en outre une clavette de guidage 53 coopérant avec une rainure 54 réalisée dans le corps 14 du dispositif de maintien 10. Cette clavette de guidage 53 est destinée à permettre un guidage longitudinal du dispositif de maintien 10, tout en empêchant sa rotation. Lors de la mise en place du dispositif de maintien, la clavette de guidage 53 et la rainure 54 sont positionnés de façon à coopérer, puis le dispositif est placé en appui contre le bâti 52 de la machine et il est fixé au moyen des vis de blocage 51. De cette façon, le dispositif de maintien est rigide par rapport au bâti de la machine.

Dans le mode de réalisation illustré par la figure 13, le dispositif de maintien 10 comporte un écrou 48 similaire ou identique à l'écrou illustré par la figure 12. Cet écrou 48 n'est toutefois pas fixé rigidement au bâti 52 de la machine. Le bâti comporte un logement 53 dans lequel peut être placée une partie de l'écrou 48 et en particulier l'anneau 49 de cet écrou. Ce logement se termine par une paroi 54 disposée vers l'avant de la machine, c'est-à-dire en direction de la zone dans laquelle la pièce est usinée. Des goupilles 55 solidaires du bâti de la machine sont disposés de façon à pouvoir traverser les trous 50 de l'anneau 49 de l'écrou 48, pour empêcher la rotation de l'écrou et du dispositif de maintien dans son ensemble, tout en autorisant sa translation. Un ressort 56 de compression est placé autour de l'écrou 48, de façon à prendre appui d'une part contre l'anneau 49 de l'écrou et d'autre part contre la paroi 54 du logement 53. Ce ressort 56 a pour effet d'appliquer une contrainte vers l'arrière sur l'écrou 48 et par conséquent sur le dispositif de maintien 10.

La forme du dispositif de maintien est telle que cette contrainte vers l'arrière génère une contrainte de serrage des coulisseaux 12. De cette façon, quel que soit le diamètre de la pièce à usiner, pour autant que ce diamètre reste dans une gamme de diamètre que le dispositif de maintien est en mesure de recevoir, les coulisseaux 12 appliqueront toujours une force constante sur la pièce. Ceci permet d'obtenir un usinage particulièrement précis, même dans le cas où les défauts de concentricité et les fluctuations de diamètre sont importants. En pratique, il est possible d'usiner des pièces avec des tolérances inférieures à 5 centièmes de millimètres à partir de barres dont les fluctuations de diamètre sont supérieures à 7 dixièmes de millimètres.

Il est à noter que le ressort 56 peut prendre plusieurs formes. Il peut être formé, comme dans le mode de réalisation illustré, d'un ressort unique, placé autour de l'écrou 48. Il pourrait être remplacé par plusieurs ressorts disposés par exemple autour des goupilles 55 solidaires du bâti 52. Ces ressorts peuvent être formés de lames élastiques ou d'éléments pleins réalisés en une matière élastique par exemple.

Comme on peut le voir d'après les figures 9 à 13, la zone conique 20 qui agit sur les coulisseaux 12 du dispositif de maintien, ou plus généralement sur l'élément d'actionnement 13, est solidaire du bâti 52, contrairement aux dispositifs de maintien de l'art antérieur dans lesquels les éléments d'actionnement sont toujours guidés par l'élément de maintien lui-même. Le fait que cet élément d'actionnement soit solidaire du bâti permet d'assurer un centrage et un positionnement optimal de sorte que la précision de l'usinage des pièces est encore augmentée.

Le dispositif selon l'invention peut être modifié sans pour autant que son principe de fonctionnement ne soit modifié. Les zones coniques des coulisseaux peuvent être placées en direction de l'arrière de la tête, c'est-à-dire du côté du corps, ou au contraire, en direction de l'avant.

Grâce au fait que les coulisseaux sont indépendants les uns des autres, le déplacement des éléments d'actionnement a pour effet de centrer la pièce à maintenir sans utilisation d'un dispositif de centrage spécifique et complexe.

Grâce au fait que les éléments d'actionnement sont centrés par rapport au bâti de la machine, le positionnement du dispositif de maintien est particulièrement précis et permet d'obtenir un usinage particulièrement précis.

## Revendications

1. Dispositif de maintien de pièces mécaniques, comportant un porte-coulisseau (11) formé d'un corps (14) et d'une tête (15) pourvus d'un alésage central (16, 18) dans lequel est placée une partie de la pièce mécanique (17) à maintenir, cette pièce mécanique à maintenir dépassant de ladite tête (15), la tête comportant une zone conique (20), le dispositif de maintien (10) comportant en outre au moins deux coulisseaux (12) et un élément d'actionnement (13) desdits coulisseaux, la tête (15) comportant au moins deux alésages latéraux (19) débouchant d'une part dans ledit alésage central (16), lesdits coulisseaux (12) étant placés chacun dans l'un desdits alésages latéraux (19), ces coulisseaux (12) étant ajustés dans les alésages latéraux (19) de façon à pouvoir y glisser, lesdits coulisseaux (12) dépassant de la zone conique (20) de ladite tête, l'élément d'actionnement (13) desdits coulisseaux étant mobile longitudinalement le long de la zone conique (20) de la tête, le déplacement dudit élément d'actionnement (13) ayant pour effet de déplacer lesdits coulisseaux (12) dans les alésages latéraux (19) correspondants le long d'un axe perpendiculaire à un axe longitudinal (20') de l'alésage central (16), **caractérisé en ce que** les au moins deux alésages latéraux (19) débouchent d'autre part dans ladite zone conique (20), **en ce que** la tête (15) du porte-coulisseau (11) comporte au moins une gorge (28) traversant les alésages latéraux (19), **en ce que** les coulisseaux (12) comportent une lumière (30), **en ce que** le dispositif de maintien (10) comporte une barrette (29) traversant la gorge (28) et la lumière (30) du coulisseau, et **en ce que** le coulisseau (12) comporte un trou fileté (31) agencé pour recevoir une vis de précontrainte (33) et un ressort de rappel (32) prenant appui d'une part sur la vis de précontrainte (33) et d'autre part sur ladite barrette (29).

2. Dispositif de maintien selon la revendication 1, **caractérisé en ce que** l'élément d'actionnement (13) est un bonnet (23) recouvrant la tête (15) du porte-coulisseau (11), ce bonnet comportant un passage central (24) disposé en regard dudit alésage central (16) et une zone intérieure conique (25) disposée à proximité de ladite zone conique (20) de la tête du porte-coulisseau.

3. Dispositif de maintien selon la revendication 2, **caractérisé en ce que** la zone intérieure conique (25) du bonnet (23) comporte au moins deux parties (26, 27) ayant des angles de conicité distincts.

4. Dispositif de maintien selon la revendication 1, **caractérisé en ce que** l'élément d'actionnement (13) est un cylindre d'actionnement (44) disposé au moins partiellement autour du porte-coulisseau (11) de façon à pouvoir se déplacer longitudinalement par rapport à ce porte-coulisseau, ce cylindre d'actionnement (44) comportant une zone conique (46) disposée à proximité des coulisseaux (12).

5. Dispositif de maintien selon la revendication 4, **caractérisé en ce que** la zone conique (46) du cylindre d'actionnement (44) comporte au moins deux parties ayant des angles de conicité distincts.

6. Dispositif de maintien selon la revendication 4, **caractérisé en ce que** la tête (15) du porte-coulisseau (11) est au moins partiellement entourée d'un capuchon (47).

7. Dispositif de maintien selon la revendication 1, **caractérisé en ce que** l'élément d'actionnement (13) et le corps (14) sont mobiles l'un par rapport à l'autre le long de l'axe longitudinal (20') de l'alésage central (16) de ce corps.

8. Dispositif de maintien selon la revendication 7, **caractérisé en ce que** l'élément d'actionnement (13) est immobile en rotation par rapport à la tête (15) du dispositif de maintien (10).

9. Dispositif de maintien selon la revendication 1, **caractérisé en ce qu'**il comporte un écrou (48) agencé pour maintenir ledit dispositif de maintien (10) sur une machine d'usinage de pièces mécaniques (17).

10. Dispositif de maintien selon la revendication 9, **caractérisé en ce que** l'écrou (48) comporte un anneau (49) pourvu de trous (50) agencés pour coopérer avec des goupilles (55) solidaires de ladite machine d'usinage.

11. Dispositif de maintien selon la revendication 9, **caractérisé en ce qu'**il comporte un ressort (56) disposé entre ledit écrou (48) et la machine d'usinage, ce ressort (56) étant agencé pour appliquer une contrainte sur le dispositif de maintien (10) dans un sens opposé à la zone d'usinage de la pièce mécanique.

12. Dispositif de maintien selon la revendication 9, **caractérisé en ce que** l'élément d'actionnement (13) des coulisseaux (12) est positionné par rapport à ladite machine d'usinage.

## Patentansprüche

1. Haltevorrichtung für mechanische Teile, die einen Schiebehalter (11) umfasst, der aus einem Körper (14) und einem Kopf (15) mit einer zentralen Bohrung (16, 18) besteht, in der ein Teil des zu haltenden mechanischen Teils (17) angeordnet ist, wobei dieses zu haltende mechanische Teil aus dem besagten Kopf (15) herausragt, der Kopf einen konischen Bereich (20) umfasst, die Haltevorrichtung (10) außerdem mindestens zwei Schieber (12) und ein Betätigungselement (13) der besagten Schieber umfasst, der Kopf (15) mindestens zwei seitliche Bohrungen (19) umfasst, die einerseits in die besagte zentrale Bohrung (16) münden, die besagten Schieber (12) jeweils in einer der besagten seitlichen Bohrungen (19) angeordnet sind, diese Schieber (12) in den seitlichen Bohrungen (19) so angeordnet sind, dass sie darin gleiten können, die besagten Schieber (12) aus dem konischen Bereich (20) des besagten Kopfes herausragen, das Betätigungselement (13) der besagten Schieber in Längsrichtung entlang des konischen Bereichs (20) des Kopfes beweglich ist, wobei die Verschiebung des besagten Betätigungselements (13) bewirkt, dass die besagten Schieber (12) in den entsprechenden seitlichen Bohrungen (19) entlang einer Achse senkrecht zu einer Längsachse (20') der zentralen Bohrung (16) verschoben werden, **gekennzeichnet dadurch, dass** die mindestens zwei seitlichen Bohrungen (19) andererseits in den besagten konischen Bereich (20) münden, dass der Kopf (15) des Schiebehalters (11) mindestens eine Nut (28) umfasst, die durch die seitlichen Bohrungen (19) verläuft, dass die Schieber (12) ein Licht (30) umfassen, dass die Haltevorrichtung (10) einen Steg (29) umfasst, der durch die Nut (28) und das Licht (30) des Schiebers verläuft, und dass der Schieber (12) eine Gewindebohrung (31) umfasst, die zum Aufnehmen einer Vorspannschraube (33) und einer Rückstellfeder (32) ausgelegt ist, die einerseits auf der Vorspannschraube (33) und andererseits auf dem besagten Steg (29) aufliegt.

2. Haltevorrichtung nach Anspruch 1, **gekennzeichnet dadurch, dass** das Betätigungselement (13) eine Kappe (23) ist, die den Kopf (15) des Schiebehalters (11) bedeckt, wobei diese Kappe einen zentralen Durchgang (24), der gegenüber der besagten zentralen Bohrung (16) angeordnet ist, und einen konischen Innenbereich (25) umfasst, der in der Nähe des besagten konischen Bereichs (20) des Kopfes des Schiebehalters angeordnet ist.

3. Haltevorrichtung nach Anspruch 2, **gekennzeichnet dadurch, dass** der konische Innenbereich (25) der Kappe (23) mindestens zwei Teile (26, 27) mit unterschiedlichen Konizitätswinkeln umfasst.

4. Haltevorrichtung nach Anspruch 1, **gekennzeichnet dadurch, dass** das Betätigungselement (13) ein Betätigungszylinder (44) ist, der zumindest teilweise um den Schiebehalter (11) angeordnet ist, sodass er sich in Längsrichtung relativ zu diesem Schiebehalter bewegen kann, wobei dieser Betätigungszylinder (44) einen in der Nähe der Schieber (12) angeordneten konischen Bereich (46) umfasst.

5. Haltevorrichtung nach Anspruch 4, **gekennzeichnet dadurch, dass** der konische Bereich (46) des Betätigungszylinders (44) mindestens zwei Teile mit unterschiedlichen Konizitätswinkeln umfasst.

6. Haltevorrichtung nach Anspruch 4, **gekennzeichnet dadurch, dass** der Kopf (15) des Schiebehalters (11) zumindest teilweise von einer Kappe (47) umgeben ist.

7. Haltevorrichtung nach Anspruch 1, **gekennzeichnet dadurch, dass** das Betätigungselement (13) und der Körper (14) entlang der Längsachse (20') der zentralen Bohrung (16) dieses Körpers relativ zueinander beweglich sind.

8. Haltevorrichtung nach Anspruch 7, **gekennzeichnet dadurch, dass** das Betätigungselement (13) in Bezug auf den Kopf (15) der Haltevorrichtung (10) drehfest ist.

9. Haltevorrichtung nach Anspruch 1, **gekennzeichnet dadurch, dass** sie eine Mutter (48) umfasst, die so angeordnet ist, dass sie die besagte Haltevorrichtung (10) an einer Maschine zur Bearbeitung mechanischer Teile (17) hält.

10. Haltevorrichtung nach Anspruch 9, **gekennzeichnet dadurch, dass** die Mutter (48) einen Ring (49) umfasst, der mit Löchern (50) versehen ist, die so angeordnet sind, dass sie mit Stiften (55) zusammenwirken, die fest mit der besagten Bearbeitungsmaschine verbunden sind.

11. Haltevorrichtung nach Anspruch 9, **gekennzeichnet dadurch, dass** sie eine Feder (56) umfasst, die zwischen der genannten Mutter (48) und der Bearbeitungsmaschine angeordnet ist, wobei diese Feder (56) so angeordnet ist, dass sie eine Kraft auf die Haltevorrichtung (10) in einer dem Bearbeitungsbereich des mechanischen Teils entgegengesetzten Richtung ausübt.

12. Haltevorrichtung nach Anspruch 9, **gekennzeichnet dadurch, dass** das Betätigungselement (13) des Schiebers (12) relativ zu der besagten Bearbeitungsmaschine angeordnet ist.

## Claims

1. A holding device for holding mechanical parts, comprising a slide holder (11) formed of a body (14) and a head (15) provided with a central bore (16, 18) in which a portion of the mechanical part (17) to be held is located, this mechanical part to be held protruding from said head (15), the head comprising a conical area (20), the holding device (10) further comprising at least two sliders (12) and an actuating element (13) for said sliders, the head (15) comprising at least two lateral bores (19) opening on one side into said central bore (16), said sliders (12) being each disposed in one of said lateral bores (19), these sliders (12) being fitted within the lateral bores (19) so as to be able to slide therein, said sliders (12) protruding from the conical area (20) of said head, the actuating element (13) for said sliders being movable longitudinally along the conical area (20) of the head, the movement of said actuating element (13) having the effect of moving said sliders (12) within the respective lateral bores (19) along an axis perpendicular to a longitudinal axis (20') of the central bore (16), **characterized in that** the at least two lateral bores (19) open on the other side into said conical area (20), **in that** the head (15) of the slide holder (11) comprises at least one groove (28) passing through the lateral bores (19), **in that** the sliders (12) comprise a slot (30), **in that** the holding device (10) comprises a bar (29) passing through the groove (28) and the slot (30) of the slider, and **in that** the slider (12) comprises a threaded hole (31) arranged for receiving a preload screw (33) and a return spring (32) bearing on one side on the preload screw (33) and on the other side on said bar (29).

2. A holding device according to claim 1, **characterized in that** the actuating element (13) is a cover (23) covering the head (15) of the slide holder (11), this cover comprising a central passage (24) disposed opposite said central bore (16) and a conical inner area (25) disposed near said conical area (20) of the head of the slide holder.

3. A holding device according to claim 2, **characterized in that** the conical inner area (25) of the cover (23) comprises at least two parts (26, 27) with different taper angles.

4. A holding device according to claim 1, **characterized in that** the actuating element (13) is an actuating cylinder (44) disposed at least partially around the slide holder (11) so as to be able to move longitudinally relative to this slide holder, this actuating cylinder (44) comprising a conical area (46) disposed near the sliders (12).

5. A holding device according to claim 4, **characterized in that** the conical area (46) of the actuating cylinder (44) comprises at least two parts with different taper angles.

6. A holding device according to claim 4, **characterized in that** the head (15) of the slide holder (11) is at least partially surrounded by a cap (47).

7. A holding device according to claim 1, **characterized in that** the actuating element (13) and the body (14) are movable relative to each other along the longitudinal axis (20') of the central bore (16) of this body.

8. A holding device according to claim 7, **characterized in that** the actuating element (13) is rotationally fixed relative to the head (15) of the holding device (10).

9. A holding device according to claim 1, **characterized in that** it comprises a nut (48) arranged to hold said holding device (10) on a machine tool for machining mechanical parts (17).

10. A holding device according to claim 9, **characterized in that** the nut (48) comprises a ring (49) provided with holes (50) arranged to cooperate with pins (55) integral with said machine tool.

11. A holding device according to claim 9, **characterized in that** it comprises a spring (56) disposed between said nut (48) and the machine tool, this spring (56) being arranged to apply a stress on the holding device (10) in a direction opposite to the machining area of the mechanical part.

12. A holding device according to claim 9, **characterized in that** the actuating element (13) of the sliders (12) is positioned relative to said machine tool.
